# EUROPEAN PATENT SPECIFICATION

(11) **EP 4 088 929 B1**
(45) Date of publication and mention of the grant of the patent: **23.08.2023**
(21) Application number: 22166431.1
(22) Date of filing: 04.04.2022
(51) Int. Cl.: B32B 39/00, E04C 2/06

(54) **PLANT FOR PROCESSING OF CERAMIC OR STONE SLABS**
ANLAGE ZUR BEARBEITUNG VON KERAMIK- ODER STEINPLATTEN
INSTALLATION POUR TRAITEMENT DE PLAQUES EN CÉRAMIQUE OU PIERRE

(30) Priority: 10.05.2021 IT 202100011837
(43) Date of publication of application: 16.11.2022
(73) Proprietor: Mectiles Italia S.r.l., 42013 Casalgrande (RE) (IT)
(72) Inventor: LOTTI, Giovanni, I-42013 CASALGRANDE (IT)
(74) Representative: Di Bernardo, Antonio

(56) References cited:
- WO-A1-2018/193416
- US-B2- 10 562 206

## Description

### TECHNICAL FIELD

The present invention refers to the sector of slab processing, in particular ceramic or stone slabs. In detail, the present invention relates to a plant for coupling a net, or reinforcement mat, to a ceramic or stone slab.

### BACKGROUND

In the ceramic and "natural" stone processing industry, it is customary to apply a net, or mat, to one of the main surfaces of the slabs to secure them in case of breakage. In detail, the slabs - in particular large-sized slabs - can be structurally fragile, having a pair of large faces - one lower and one upper - separated by a limited thickness. In case of breakage, the net holds the single pieces of the slab, preventing some of them from falling and injuring the personnel involved in the transport or installation thereof.

To date, the reinforcement net application procedure - that is, applying the net to the slab - envisages placing the slab to be processed onto a rigid support element, in the jargon called 'stretcher', with the lower face turned upwards and the upper face (the one with aesthetic value) in contact with the stretcher. Alternatively, the upper face of the slab is protected with an adhesive film and rested directly on the transport system without the aid of the stretcher.

Subsequently, the lower face is then covered with an adhesive substance, onto which the net is deposited. Finally, the slab is introduced into a drying oven in order to dry the adhesive substance, thus fixing the net on the slab.

In order to carry out the reinforcement net application procedure, the slab is lifted from a loading station, where it lies with the lower face turned downwards, and is rotated so as to be placed onto the stretcher (or onto the loading system if the upper face is protected by adhesive film) with the lower face turned upwards. This is necessary for depositing the net and the adhesive substance onto the lower face of the slab. Furthermore, at the end of the processing, the slab is rotated again so as to be deposited in an unloading station with the lower slab facing downwards.

Current reinforcement net application plants are built along a straight line that goes from the loading station to the unloading station, therefore they can take up a lot of space and cannot be installed in all the warehouses. In addition, in plants that use a stretcher to transport the slab, time is required to recover the stretchers at the end of the processing cycle, return them to the loading station and reuse them again.

Plants capable of transporting concrete panels or ceramic slabs are known from US10562206B2 and WO2018/193416. While the former refers to the production of cementitious panels, the latter discloses a resin application line for providing slabs with a reinforcement net.

### OBJECTS AND SUMMARY OF THE INVENTION

An object of the present invention is to overcome the drawbacks of the prior art.

In particular, it is an object of the present invention to present a plant for reinforcement that allows a reinforcement net to be applied to a slab, reducing the overall dimensions of the plant and allowing the recovery times of the stretchers to be reduced.

These and other objects of the present invention are achieved by a plant incorporating the features of the accompanying claims, which form an integral part of the present description.

According to a first aspect, the present invention is directed to a plant for processing ceramic or stone slabs, comprising:
- a first tilting station for lifting a slab and placing it on a rigid support element with the face to be provided with a reinforcement net facing upwards;
- an adhesive deposition station for depositing an adhesive substance on the face to be provided with a reinforcement net, the adhesive substance being suitable for fixing a reinforcement net to the face of the slab to be provided with a reinforcement net;
- a reinforcement net application station for laying the net on the adhesive substance arranged on the face to be provided with a reinforcement net;
- a drying oven configured to receive the slab to which the net is applied on the face to be provided with a reinforcement net and to dry the adhesive substance;
- a second tilting station configured to receive the rigid support element with the slab exiting the oven, lift the slab from the rigid support element, tilt the slab and place it with the net facing downwards on an end transport line suitable for transporting the slab to an unloading position.

The second tilting station is also configured to move the rigid support element towards a recovery transport line when the slab is lifted from the rigid support element. The recovery transport line is adapted to transport the rigid support element from the second tilting station to the first tilting station.

Thanks to this solution, it is possible to circulate the rigid support element, i.e. the stretcher, within the plant, without having to manually recover it from the unloading zone and reload it into the zone. This therefore makes it possible to reduce the production times and the number of support elements needed in the plant.

Advantageously, then, the recovery transport line is suitable for transporting the rigid support element arranged with a longitudinal axis transverse to an advancement direction of the support element. This allows to further reduce the overall dimensions.

In one embodiment, the plant comprises a loading/unloading station (e.g., a hoist crane or other operatorless automatic loading system, such as an anthropomorphic or Cartesian robot) suitable for lifting the slab from a loading zone and deposit it on an initial transport line suitable for moving the slab towards the first tilting station, the loading/unloading station being also suitable for lifting the slab from the end transport line to place it in an unloading zone. This solution allows loading and unloading slabs from a single, conveniently located station in the plant, thereby optimising plant costs and minimising the spaces occupied.

Advantageously, then the adhesive deposition station comprises a pair of tanks suitable for containing different chemical compounds, and a pair of pumps suitable for taking the chemical compounds from the two tanks and pumping them at a pressure greater than 15MPa towards a dispenser. The chemical compounds are pumped into respective pumping conduits reaching a mixing unit interposed between the pumps and a dispenser. The mixing unit comprises a valve with a hydraulic actuator adapted to intercept the inlet ports of the pumping conduits in the mixing unit to allow or prevent the chemical compounds from entering the mixing unit.

This solution allows at the same time to obtain a uniform dispensing of the adhesive on the slab and reduce the maintenance times of the plant. The use of a hydraulic actuator to actuate the shut-off valve of the pumping conduits, in fact, allows to reduce the interventions that would otherwise be necessary to clean it from the adhesive being formed.

Preferably, then, the plant comprises a rolling station which, upon arrival of the slab, brings a rolling head above the centre of the slab, then lowers the rolling head until the net is pressed against the slab. Once positioned on the net, the station moves the rolling head from the centre towards an edge of the slab following a first direction. Once it has reached the edge of the slab, the rolling head is raised and returned to the centre of the slab. The rolling station then repeats the operation by lowering the rolling head until it touches the slab and by moving it in another direction different from the first.

This solution, which can be implemented for example with a five-axis Cartesian gantry robot capable of moving the rolling head along five axes, makes it possible to avoid making excessively long rollings and thus reduce the risk of the roller, by being filled with glue, lifting the net from the slab.

In one embodiment, the plant comprises a U-shaped transport line suitable for moving the rigid support element with the slab according to a U-shaped path, so as to reduce the overall length of the plant. Advantageously, then, the U-shaped transport line is suitable for transporting the rigid support element from the rolling station to the drying oven. This solution, in fact, seems preferable to reduce the dimensions of the plant.

In one embodiment, the rigid support element comprises a wooden slab element coated with a material refractory to the adhesive, for example a polypropylene (or derivative) sheet if the adhesive is polyurethane-based.

This solution makes it possible to obtain a cheap rigid support element (wood can be recycled), but at the same time it is effective because the coating refractory to the adhesive prevents the rigid element from becoming dirty and allows it to be continuously reused in the plant.

Advantageously, then, the rigid support element further comprises a cushioning layer, for example a layer of expanded material of Polyethylene or a derivative thereof with a thickness from 5 to 10mm, interposed between the wooden slab element and the coating material. In this way, when the slab is resting on the support element, the cushioning layer is flattened adhering to the edge of the slab and preventing any adhesive residue from soiling the face of the slab in contact with the coating layer of the stretcher.

Further features and advantages of the present invention will be more evident from the description of the accompanying drawings.

### BRIEF DESCRIPTION OF THE DRAWINGS

The invention is described hereinbelow with reference to certain examples provided by way of non-limiting example and illustrated in the accompanying drawings. These drawings illustrate different aspects and embodiments of the present invention and, where appropriate, reference numerals illustrating structures, components, materials and/or similar elements in different drawings are indicated by similar reference numerals.
Figure 1 is a plan view of a plant for the reinforcement of ceramic or natural stone slabs, according to an embodiment of the present invention;
Figures 2A and 2B are schematic plan and side views, respectively, of a slab processed by the plant of Figures 1;
Figure 3 shows a plan view of a stretcher of the plant of Figure 1;
Figure 4 shows a section of the plant stretcher of Figure 3 along the axis X-X;
Figure 5 is a schematic side view of a stretcher on which a slab covered with an adhesive is arranged;
Figure 6 is a schematic plan view of a net to be applied to the slab;
Figure 7 is a schematic side view of a stretcher on which a slab covered with an adhesive and with a reinforcement net is arranged;
Figure 8 is a block diagram of the adhesive deposition station of Figure 1.

### DETAILED DESCRIPTION OF THE INVENTION

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to" unless otherwise indicated.

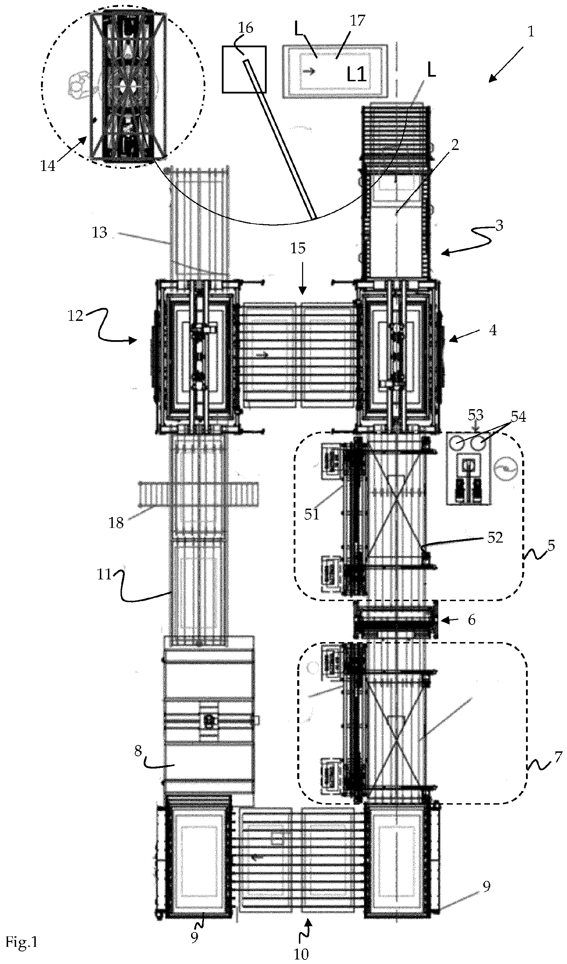

With reference to Figure 1, a plant 1 for processing ceramic or stone slabs (indicated with reference L) according to an embodiment of the present invention is illustrated.

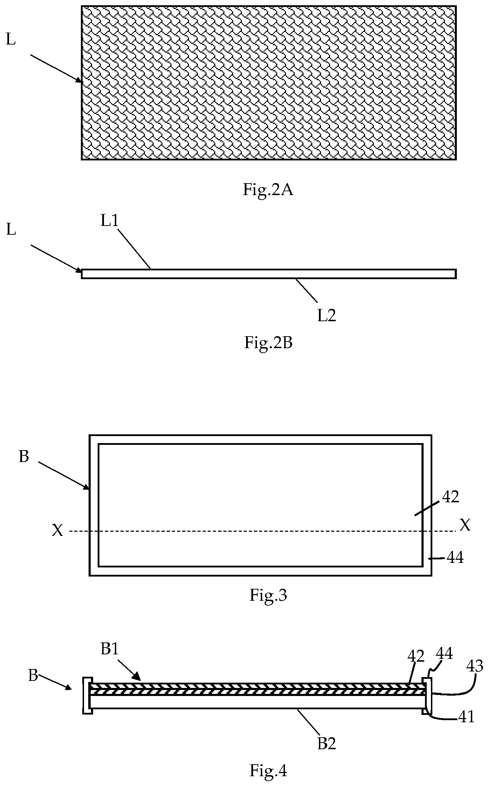

In general, a slab L - schematically illustrated in Figures 2A and 2B - has an upper (or aesthetic) face L1 intended to remain visible once laid (for example, to form a flooring or to coat a wall), and a lower (or rest) face L2, opposite the upper face L1, configured to be fixed to a support body (for example, a slab in the case of flooring or a wall in the case of coating). In particular, the dimensions of the surfaces L1 and L2 of the slab L are much greater than the thickness separating these surfaces L1 and L2.

The slab L is taken from a loading zone 17 by means of a jib crane with hoist 16 that allows it to be lifted and deposited on an initial transport line 2, in particular a large format transport line, i.e. a roller transport line for large-sized slabs, for example greater than 1000x2000 mm. The loading zone can be, for example, a storage crate, or an A-frame stand or a loading plane, while lifting means other than the jib crane can be provided for lifting the slab, such as robots equipped with suction cups or other means for gripping the slab.

In detail, the slab L is deposited on the large format transport line 2 with the upper face L1 facing upwards, to be then moved along the different stations of the plant 1 by a movement group 3. The movement group 3 comprises transport elements that are per se known and will therefore not be described in detail in the following. By way of example, the movement group comprises one or more roller and/or conveyor belt modules, each associated with a respective station and/or a transition region between two adjacent stations, according to criteria per se known and therefore not described in detail for brevity's sake. Unless otherwise specified, therefore, a transport line refers to a line that can have rollers and/or bands and/or belts.

Once loaded on the plant, the slab L reaches a tilting station 4 where it is lifted, tilted and placed on a stretcher B with the lower face L2 facing upwards. Tilting stations are per se known in the industry and can, for example, make use of a suction cup group that acts on the lower face of the slab to pick it up and tilt it.

The stretcher B, illustrated in Figures 3 and 4, comprises a wooden slab element 41 coated with a coating material 42 refractory to polyurethane, i.e. such that it does not bind to the polyurethane under environmental conditions. For example, the coating material 42 may be a polyethylene sheet or a derivative thereof, in particular a polypropylene sheet.

In the example of Figure 3, the stretcher B further comprises a cushioning layer, for example a layer of expanded material of Polyethylene or a derivative thereof, interposed between the wooden element 41 and the coating material 42. The cushioning layer 43 can be, for example, a mat of expanded material of Polyethylene or derivative with a thickness from 5 mm to 10 mm.

Finally, the stretcher B also comprises a metal frame 44 which holds the coating material 42 and the cushioning material 43 in place on the wooden element 41.

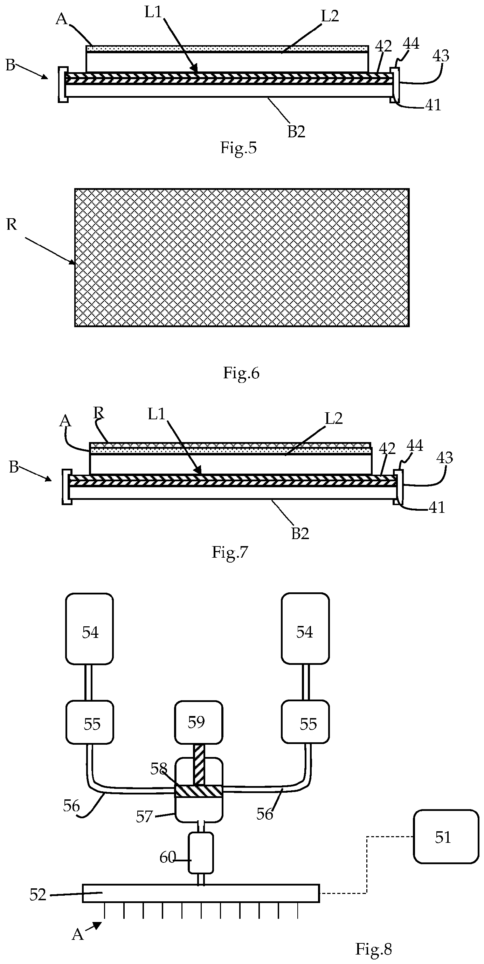

Once tilted and resting on the stretcher B, the slab L is moved to an adhesive deposition station 5 configured to deposit an adhesive A on the net R arranged on the stretcher B - as schematically illustrated in Figure 7.

In the example considered, the adhesive deposition station 5 (of which a block diagram is shown in Figure 8) comprises an actuator 51 configured to move along two axes - substantially parallel to a plane on which the stretcher B lies. The actuator 51 is operated to move an apparatus 52 for dispensing the adhesive substance over the entire lower face L2 of the slab resting on the stretcher B. For example, the actuator 51 belongs to the type of the so-called Cartesian gantry robot or it can be an anthropomorphic arm.

The dispensing apparatus 52 is configured to apply a uniform layer of adhesive on the lower face L2 of the slab. For example, the dispensing apparatus 52 is a comb-type, airless-type or airbrush-type dispensing apparatus.

In the example considered, the adhesive deposition station 5 comprises an adhesive pumping module 53 provided with a pair of tanks 54 intended to store two different substances, which, suitably mixed at the time of dispensing, constitute the adhesive A which is deposited on the slab L. The pumping module comprises two volumetric pumps 55, each of which draws from a respective tank 54 and pump a respective component of the adhesive A in predetermined quantity and pressure sending it to the dispenser. Preferably, the pumps and the dispensing head are configured to operate at pressures comprised between 10Bar and 150Bar. Alternatively, they could be pumps operating at pressures above 150Bar (i.e. 15MPa, 15 mega Pascal).

The pumps 55 pump the respective chemical compounds into pumping conduits 56 that end up in a mixing unit 57, which comprises a valve 58 with a hydraulic actuator 59. The valve 58 intercepts the inlet ports of the pumping conduits 56 in the mixing unit 57 to allow or prevent chemical compounds from entering the mixing unit 57. When the valve 58 allows the chemical compounds pumped at high pressure by the pumps 55 to enter the mixing unit, they collide and descend by pressure into a static mixer 60 where mixing takes place. The adhesive A obtained by mixing the chemical compounds contained in the two tanks then reaches the dispenser 52.

In one embodiment suitable for the application of a reinforcement net to ceramic slabs, the adhesive A is of the polyurethane-based type, therefore the two tanks 54 of the pumping module 53 are loaded with polyols and isocyanate, respectively.

In one embodiment suitable for the application of a reinforcement net to natural stone slabs, on the other hand, the two tanks 54 of the pumping module 53 are loaded with an epoxy resin and the catalyst thereof, respectively.

Figure 5 shows, in section, the stretcher B with the slab L to which the adhesive A is applied at the exit of the adhesive deposition station 5.

The stretcher with the slab covered with adhesive then continues on its way until it reaches a reinforcement net application station 6 configured to deposit a net R on the adhesive A.

The net R - schematically illustrated in Figure 6 - is a substantially laminar reticular structure. For example, the net R can be substantially constituted by a mesh made of fibre glass or other synthetic material.

In the example considered, the reinforcement net application station 6 comprises a reinforcement net application module (in jargon also called a sheet laying device) loaded with a net reel and arranged to lay the net, and cutting means for cutting the net to the appropriate length, for example equal to or less than the lower face L2 of the slab L. The cutting means may be included in the reinforcement net application modules or be separate from them. At the exit of the reinforcement net application station 6, the slab and stretcher assembly looks like in Figure 7.

Subsequently, the stretcher B is moved up to a rolling station 7 set up for pressing the net R onto the adhesive A so that the net R adheres to the slab L.

In the example considered, the rolling station 7 comprises a five-axis Cartesian gantry robot capable of moving a rolling head along five axes. In detail, the Cartesian gantry is preferably configured as follows: upon arrival of the slab, the gantry brings the rolling head above the centre of face L2 of the slab, then lowers it until it presses the net against the slab. Once positioned on the net, the rolling head is moved from the centre towards an edge of the slab following a first direction. Once it has reached the edge of the slab, the head is lifted, returned to the centre and lowered again against the net; the head is then moved along another direction different from the first. The process is then repeated several times by rolling the net in different directions so that it adheres to the slab.

Obviously, instead of the five-axis Cartesian gantry, other solutions can be envisaged, such as the use of an anthropomorphic arm to press the net and make it adhere to the slab.

The stretcher B with the slab L is then moved towards an oven 8 by means of a pair of 90° lift benches with roller conveyor 9 and a large format transport line 10. Each of the 90° lift benches with roller conveyor 9 allows the direction of movement of the slab in the plant to be rotated by 90°, making de facto a U-turn of the movement direction. The large format transport line 10, for example of the belt type, is suitable for transporting the slab arranged transversely to the advancement direction of the slab, i.e. with the smaller dimension of the face L2 arranged in the advancement direction of the slab L. This allows the length of the plant to be reduced.

The drying oven 8 is configured to heat the assembly, consisting substantially of the slab L and the net R coated with adhesive A, to a predetermined temperature - for example comprised between 40 and 50 °C. In particular, the drying oven 8 is configured to dry the adhesive A such that the net R is firmly bound to the slab L. The drying oven 8 is preferably a ventilated oven, however other types of ovens may be envisaged.

Once the drying of the adhesive A has been completed, the stretcher B, with the slab on the top, is moved, through a large format transport line 11, as far as a tilting station 12.

In the tilting station 12 the slab L is lifted from the stretcher B, tilted and placed, with the lower face L1 facing downwards, on a large format transport line 13, at the end of which it can be unloaded by means of the hoist crane 16 which lifts it from the transport line 13 and positions it in an unloading zone 14 which, in the example considered here, is a rotating fifth wheel. In other embodiments, the unloading zone 14 may be a storage box, or an A-frame stand or a support plane.

The tilting station 12 further comprises a movable roller conveyor which intervenes to move the stretcher B towards a transport line 15 when the slab L is lifted from the stretcher B.

The transport line 15, hereinafter also referred to as the "recovery transport line", transports the stretcher B to the tilting station 4 where it is reused to support a new slab L. The recovery transport line 15 is of a type suitable for transporting large format slabs, and is preferably of the belt type; moreover, the recovery transport line 15 is suitable for transporting the slab arranged transversely to the advancement direction of the slab, i.e. with the smaller dimension of the face L2 arranged in the advancement direction of the slab L.

It is therefore evident that the plant described above allows the above-mentioned aims to be achieved, reducing processing times and costs, since it is possible to reduce the number of stretchers needed in the plant and it is not necessary to use resources to recover used stretchers and return them to the loading station.

It is also clear that it is possible to make modifications to the above-described plant without falling outside the scope of protection defined by the claims.

For example, a brushing station configured to brush the stretcher B before it is put back into circulation in the plant can be arranged at the recovery transport line 15.

The rolling station 7 may be replaced by a station in which a squeegee (or several squeegees where appropriate) is used instead of a roller to make the net adhere to the slab.

In addition, the reinforcement net application station 6 can comprise several reinforcement net application modules, each provided with a different net roll, so that different nets R can be laid on different types of slabs.

The plant can then be fitted with a bridge ladder 18, preferably movable on wheels, to allow access to the internal zone of the plant for maintenance thereof.

It is also clear that the workstations described above can be combined together, e.g. a station where the adhesive as well as the net are deposited can be provided. Even if such a combination is not preferred, as it lengthens the production times of the plant, it is always possible.

Finally, it should also be noted that the stations can be arranged differently, albeit in the same order as described above. That is to say that the stations can be placed at different points in the space and connected by means of transport lines of different types and that they take different routes depending on the needs. For example, the oven could be in line with the reinforcement net application station and the plant provided with a U-bent transport line for transporting the stretcher up to the tilting station 12. In general, therefore, several arrangements are possible that allow to create a closed-loop plant, in which the stretcher continues to turn without being unloaded from the plant.

Similarly, transport lines may be of a different type from those described depending on the needs.

## Claims

1. Plant (1) for processing ceramic or stone slabs, comprising:
- a first tilting station (4) for lifting a slab (L) and placing it on a rigid support element (B) with the face to be provided with a reinforcement net (L2) facing upwards;
- an adhesive deposition station (5) suitable for depositing an adhesive substance (A) on the face to be provided with a reinforcement net (L2), the adhesive substance (A) being suitable for fixing a reinforcement net (R) to the face of the slab (L) to be provided with a reinforcement net (L2),
- a reinforcement net application station (6) for laying the net (R) on the adhesive substance arranged on the face to be provided with a reinforcement net (L2);
- a drying oven (8) configured to receive the slab (L) to which the net (R) is applied on the face to be provided with a reinforcement net (L2) and to dry the adhesive substance (A), and
- a second tilting station (12) adapted to
- receive the rigid support element with the slab exiting the oven,
- lift the slab (L) from the rigid support element (B)
- tilt the slab (L) and place the slab with the net (R) facing downwards on an end transport line (13) suitable for transporting the slab to an unloading position,
**characterised in that**
the second tilting station is also configured to move the rigid support element (B) towards a recovery transport line (15) when the slab (L) is lifted from the rigid support element (B),
and **in that** the recovery transport line (15) is suitable for transporting the rigid support element (B) from the second tilting station (12) to the first tilting station (4).

2. Plant (1) according to claim 1, wherein the recovery transport line (15) is suitable for transporting the rigid support element (B) arranged with a longitudinal axis transverse to an advancement direction of the support element.

3. Plant (1) according to claim 1 or 2, further comprising a loading/unloading station (16) suitable for lifting the slab from a loading zone and depositing it on an initial transport line suitable for moving the slab towards the first tilting station (4), the loading/unloading station (16) being further suitable for lifting the slab from the end transport line to position it in an unloading zone.

4. Plant (1) according to any one of the preceding claims, wherein the adhesive deposition station (5) comprises a pair of tanks (54) suitable for containing different chemical compounds, and a pair of pumps (55) suitable for taking the chemical compounds from the two tanks and pumping them at a pressure greater than 15MPa towards a dispenser (52), wherein the chemical compounds are pumped in respective pumping conduits (56) reaching a mixing unit (57, 60) interposed between the pumps (55) and a dispenser (52), and wherein the mixing unit (57) comprises a valve (58) having a hydraulic actuator adapted to intercept the inlet ports of the pumping conduits (56) in the mixing unit (57) to allow or prevent the chemical compounds from entering the mixing unit.

5. Plant (1) according to any one of the preceding claims, further comprising a rolling station (7) configured to:
a. upon arrival of the slab, bring a rolling head above the centre of the face of the slab to be provided with a reinforcement net (L2),
b. then lower the rolling head until the net is pressed against the slab,
c. once positioned on the net, move the rolling head from the centre towards an edge of the slab following a first direction,
d. once it has reached the edge of the slab, raise the rolling head, and
e. return the head to the centre, lower it until it touches the slab and move it in another direction different from the first.

6. Plant (1) according to claim 5, wherein the rolling station (7) comprises a five-axis Cartesian gantry robot capable of moving the rolling head along five axes.

7. Plant (1) according to any one of the preceding claims, further comprising a U-shaped transport line (9,10) suitable for moving the rigid support element (B) with the slab along a U-shaped path.

8. Plant (1) according to claim 7, wherein the U-shaped transport line is suitable for transporting the rigid support element (B) from the rolling station (7) to the drying oven (8).

9. Plant (1) according to any one of the preceding claims, wherein the rigid support element (B) comprises a wooden slab element (41) coated with a material (42) refractory to the adhesive substance.

10. Plant (1) according to claim 9, wherein the rigid support element (B) further comprises a cushioning layer, for example a layer made of expanded material of Polyethylene or a derivative thereof, interposed between the wooden slab element (41) and the coating material (42), said cushioning layer being suitable for compressing under the weight of the slab (L) in such a way that it adheres to the edge of the slab once it is resting on the rigid support element (B).

11. Plant (1) according to claim 10, wherein the rigid support element (B) also comprises a metal frame (44) that holds the coating material (42) and the cushioning material (43) in place on the wooden element (41).

## Patentansprüche

1. Anlage (1) zum Bearbeiten von Keramik- oder Steinplatten, umfassend:
- eine erste Kippstation (4) zum Anheben einer Platte (L) und zum Legen auf ein starres Trägerelement (B) mit der Fläche nach oben zeigend, die mit einem Bewehrungsnetz (L2) bereitgestellt wird;
- eine Klebstoffauftragungsstation (5), die geeignet ist, eine Klebstoffsubstanz (A) auf die Fläche, die mit einem Bewehrungsnetz (L2) bereitgestellt wird, aufzutragen, wobei die Klebstoffsubstanz (A) geeignet ist, ein Bewehrungsnetz (R) auf der Fläche der Platte (L), die mit einem Bewehrungsnetz (L2) bereitgestellt wird, zu befestigen,
- eine Bewehrungsnetzaufbringungsstation (6) zum Legen des Netzes (R) auf die Klebstoffsubstanz, die auf der Fläche, die mit einem Bewehrungsnetz (L2) bereitgestellt wird, angeordnet ist;
- einen Trockenofen (8), der konfiguriert ist, um die Platte (L), auf die das Netz (R) auf der Fläche aufgebracht wird, die mit einem Verstärkungsnetz (L2) bereitgestellt wird, aufzunehmen und die Klebstoffsubstanz (A) zu trocknen, und
- eine zweite Kippstation (12), die geeignet ist
- das starre Trägerelement mit der aus dem Ofen kommenden Platte aufzunehmen,
- die Platte (L) von dem starren Trägerelement (B) zu heben
- die Platte (L) zu kippen und die Platte mit dem Netz (R) nach unten zeigend auf ein Endtransportband (13) zu legen, das für den Transport der Platte zu einer Entladeposition geeignet ist,
**dadurch gekennzeichnet, dass**
die zweite Kippstation auch konfiguriert ist, um das starre Trägerelement (B) in Richtung einer Rückholtransportlinie (15) zu bewegen, wenn die Platte (L) von dem starren Trägerelement (B) gehoben wird,
und dass die Rückholtransportlinie (15) geeignet ist, das starre Trägerelement (B) von der zweiten Kippstation (12) zur ersten Kippstation (4) zu transportieren.

2. Anlage (1) gemäß Anspruch 1, wobei die Rückholtransportlinie (15) geeignet ist, das starre Trägerelement (B), das mit einer Längsachse quer zu einer Vorschubrichtung des Trägerelements angeordnet ist, zu transportieren.

3. Anlage (1) gemäß Anspruch 1 oder 2, ferner umfassend eine Lade-/Entladestation (16), die geeignet ist, die Platte aus einer Ladezone zu heben und sie auf einer Anfangstransportlinie abzulegen, die geeignet ist, die Platte zur ersten Kippstation (4) zu bewegen, wobei die Lade-/Entladestation (16) ferner geeignet ist, die Platte von der Endtransportlinie zu heben, um sie in einer Entladezone zu positionieren.

4. Anlage (1) gemäß einem der vorhergehenden Ansprüche, wobei die Klebstoffauftragungsstation (5) ein Paar von Tanks (54), die geeignet sind, verschiedene chemische Verbindungen zu enthalten, und ein Paar von Pumpen (55) umfasst, die geeignet sind, die chemischen Verbindungen aus den beiden Tanks zu entnehmen und sie mit einem Druck von mehr als 15 MPa zu einem Verteiler (52) zu pumpen, wobei die chemischen Verbindungen in entsprechende Pumpleitungen (56) gepumpt werden, die eine Mischeinheit (57, 60) erreichen, die zwischen den Pumpen (55) und einem Verteiler (52) angeordnet ist, und wobei die Mischeinheit (57) ein Ventil (58), das eine hydraulischen Betätigung aufweist, umfasst, die geeignet ist, um die Einlassöffnungen der Pumpleitungen (56) in der Mischeinheit (57) zu unterbrechen, um ein Eintreten der chemischen Verbindungen in die Mischeinheit zu ermöglichen oder zu verhindern.

5. Anlage (1) gemäß einem der vorhergehenden Ansprüche, ferner umfassend eine Walzstation (7), die konfiguriert ist, um:
a. bei Ankunft der Platte einen Walzenkopf über die Mitte der Fläche der Platte zu bringen, die mit einem Bewehrungsnetz (L2) bereitgestellt wird,
b. dann den Walzenkopf abzusenken, bis das Netz gegen die Platte gedrückt wird,
c. nach der Positionierung auf dem Netz den Walzenkopf von der Mitte in Richtung eines Randes der Platte in eine erste Richtung zu bewegen,
d. nachdem er den Rand der Platte erreicht hat, den Walzenkopf zu heben, und
e. den Kopf wieder in die Mitte zurückzubringen, ihn abzusenken, bis er die Platte berührt und ihn in eine andere Richtung als die erste zu bewegen.

6. Anlage (1) gemäß Anspruch 5, wobei die Walzstation (7) einen fünfachsigen kartesischen Portalroboter umfasst, mit der Fähigkeit, den Walzenkopf entlang von fünf Achsen zu bewegen.

7. Anlage (1) gemäß einem der vorhergehenden Ansprüche, ferner umfassend eine U-förmige Transportlinie (9, 10), die geeignet ist, das starre Trägerelement (B) mit der Platte entlang einer U-förmigen Bahn zu bewegen.

8. Anlage (1) gemäß Anspruch 7, wobei die U-förmige Transportlinie geeignet ist, das starre Trägerelement (B) von der Walzstation (7) zum Trockenofen (8) zu transportieren.

9. Anlage (1) gemäß einem der vorhergehenden Ansprüche, wobei das starre Trägerelement (B) ein hölzernes Plattenelement (41) umfasst, das mit einem Material (42) beschichtet ist, das gegenüber der Klebstoffsubstanz resistent ist.

10. Anlage (1) gemäß Anspruch 9, wobei das starre Trägerelement (B) ferner eine Polsterschicht, beispielsweise eine Schicht aus geschäumtem Material aus Polyethylen oder einem Derivat davon, umfasst, die zwischen dem hölzernen Plattenelement (41) und dem Beschichtungsmaterial (42) angeordnet ist, wobei die Polsterschicht geeignet ist, unter dem Gewicht der Platte (L) so zusammengedrückt zu werden, um an der Kante der Platte zu haften, sobald diese auf dem starren Trägerelement (B) gelagert ist.

11. Anlage (1) gemäß Anspruch 10, wobei das starre Trägerelement (B) auch einen Metallrahmen (44) umfasst, der das Beschichtungsmaterial (42) und das Polstermaterial (43) auf dem hölzernen Element (41) festhält.

## Revendications

1. Installation (1) pour le traitement de plaques en céramique ou pierre, comprenant :
- un premier poste de basculement (4) pour soulever une plaque (L) et la placer sur un élément de support rigide (B) avec la face à munir d'un filet de renforcement (L2) orientée vers le haut ;
- un poste de dépôt d'adhésif (5) apte à déposer une substance adhésive (A) sur la face à munir d'un filet de renforcement (L2), la substance adhésive (A) étant apte à fixer un filet de renforcement (R) à la face de la plaque (L) à munir d'un filet de renforcement (L2),
- un poste d'application de filet de renforcement (6) pour poser le filet (R) sur la substance adhésive disposée sur la face à munir d'un filet de renforcement (L2) ;
- une étuve de séchage (8) configurée pour recevoir la plaque (L) à laquelle le filet (R) est appliqué sur la face à munir d'un filet de renforcement (L2) et pour sécher la substance adhésive (A), et
- un second poste de basculement (12) agencé pour
- recevoir l'élément de support rigide avec la plaque sortant de l'étuve,
- soulever la plaque (L) à partir de l'élément de support rigide (B),
- basculer la plaque (L) et placer la plaque avec le filet (R) orienté vers le bas sur une ligne de transport finale (13) apte à transporter la plaque jusqu'à une position de déchargement,
**caractérisée par le fait que**
le second poste de basculement est également configuré pour déplacer l'élément de support rigide (B) jusqu'à une ligne de transport de récupération (15) lorsque la plaque (L) est soulevée à partir de l'élément de support rigide (B),
et **par le fait que** la ligne de transport de récupération (15) est apte à transporter l'élément de support rigide (B) du second poste de basculement (12) au premier poste de basculement (4).

2. Installation (1) selon la revendication 1, dans laquelle la ligne de transport de récupération (15) est apte à transporter l'élément de support rigide (B) disposé avec un axe longitudinal transversal à une direction d'avance de l'élément de support.

3. Installation (1) selon la revendication 1 ou 2, comprenant en outre un poste de chargement/déchargement (16) apte à soulever la plaque à partir d'une zone de chargement et à la déposer sur une ligne de transport initiale apte à déplacer la plaque vers le premier poste de basculement (4), le poste de chargement/déchargement (16) étant en outre apte à soulever la plaque à partir de la ligne de transport finale pour la positionner dans une zone de déchargement.

4. Installation (1) selon l'une quelconque des revendications précédentes, dans laquelle le poste de dépôt d'adhésif (5) comprend une paire de réservoirs (54) aptes à contenir différents composés chimiques, et une paire de pompes (55) aptes à prélever les composés chimiques à partir des deux réservoirs et à les pomper à une pression supérieure à 15 MPa vers un distributeur (52), les composés chimiques étant pompés dans des conduites de pompage respectives (56) atteignant une unité de mélange (57, 60) interposée entre les pompes (55) et un distributeur (52), et l'unité de mélange (57) comprenant une vanne (58) ayant un actionneur hydraulique agencé pour intercepter les orifices d'entrée des conduites de pompage (56) dans l'unité de mélange (57) pour permettre ou empêcher les composés chimiques d'entrer dans l'unité de mélange.

5. Installation (1) selon l'une quelconque des revendications précédentes, comprenant en outre un poste de roulage (7) configuré pour :
a. à l'arrivée de la plaque, amener une tête roulante au-dessus du centre de la face de la plaque à munir d'un filet de renforcement (L2),
b. abaisser ensuite la tête roulante jusqu'à ce que le filet soit appuyé contre la plaque,
c. une fois positionnée sur le filet, déplacer la tête roulante à partir du centre vers un bord de la plaque en suivant une première direction,
d. une fois qu'elle a atteint le bord de la plaque, relever la tête roulante, et
e. ramener la tête au centre, l'abaisser jusqu'à ce qu'elle touche la plaque et la déplacer dans une autre direction différente de la première.

6. Installation (1) selon la revendication 5, dans laquelle le poste de roulage (7) comprend un robot portique cartésien à cinq axes capable de déplacer la tête roulante selon cinq axes.

7. Installation (1) selon l'une quelconque des revendications précédentes, comprenant en outre une ligne de transport en forme de U (9,10) apte à déplacer l'élément de support rigide (B) avec la plaque le long d'un trajet en forme de U.

8. Installation (1) selon la revendication 7, dans laquelle la ligne de transport en forme de U est apte à transporter l'élément de support rigide (B) du poste de roulage (7) à l'étuve de séchage (8).

9. Installation (1) selon l'une quelconque des revendications précédentes, dans laquelle l'élément de support rigide (B) comprend un élément de plaque en bois (41) revêtu d'un matériau (42) réfractaire à la substance adhésive.

10. Installation (1) selon la revendication 9, dans laquelle l'élément de support rigide (B) comprend en outre une couche d'amortissement, par exemple une couche faite d'un matériau expansé de polyéthylène ou d'un dérivé de celui-ci, interposée entre l'élément de plaque en bois (41) et le matériau de revêtement (42), ladite couche d'amortissement étant apte à se comprimer sous le poids de la plaque (L) de telle sorte qu'elle adhère au bord de la plaque une fois qu'elle repose sur l'élément de support rigide (B).

11. Installation (1) selon la revendication 10, dans laquelle l'élément de support rigide (B) comprend également un cadre métallique (44) qui maintient le matériau de revêtement (42) et le matériau d'amortissement (43) en place sur l'élément en bois (41).
